# EUROPÄISCHE PATENTANMELDUNG

(11) **EP 3 489 775 A1**
(43) Veröffentlichungstag der Anmeldung: **29.05.2019**
(21) Anmeldenummer: 17203573.5
(22) Anmeldetag: 24.11.2017
(51) Int. Cl.: G05B 19/042, G05B 19/05, G05B 9/00, H04L 9/00

(54) **KRYPTOGRAPHISCHER SCHUTZ VON PARAMETERN ZUR STEUERUNG EINES AKTORS**

(71) Anmelder: Siemens Aktiengesellschaft, 80333 München (DE)
(72) Erfinder: Dichtl, Markus, 80636 München (DE)

(57) **Zusammenfassung**

Die Erfindung betrifft ein Verfahren zum Steuern eines Aktors (2) mittels eines kryptografisch verschlüsselten Parametersatzes (P2). Es wird ein erster Parametersatz (P1) von einem Steuermodul (1) empfangen und damit ein zweiter Parametersatz (P2) ermittelt, wobei der zweite Parametersatz (P2) kryptografisch verschlüsselt ist, und einem Aktor (2) übermittelt wird. Die kryptografische Verschlüsselung des zweiten Parametersatzes (P2) wird im Aktor (2) aufgehoben. Des Weiteren betrifft die Erfindung einen Aktor (2), ein Steuermodul (1), ein System und ein Computerprogrammprodukt, um die Schritte des Verfahrens durchzuführen.

## Beschreibung

Die vorliegende Erfindung betrifft ein Verfahren zum rechnergestützten Steuern eines Aktors für eine Maschine mit mindestens einem Parametersatz, der kryptografisch verschlüsselt ist und von einem Steuermodul einem Aktor bereitgestellt wird und die kryptografische Verschlüsselung des Parameters im Aktor aufgehoben wird.

In der Mess-, Steuerungs- und Regelungstechnik wandeln Aktoren elektrische Signale, beispielsweise Befehle eines Steuerungscomputers, in mechanische Arbeit um oder nehmen Einfluss auf physikalische Größen, wie z.B. Druck oder Temperatur. Aktoren greifen somit aktiv in einen Prozess ein. Die Steuerung der Aktoren wird von einem Steuergerät übernommen, das elektrische Signale an den Aktor übergibt. Diese Signale beinhalten Informationen gemäß vorgegebener Steuerparameter. Die Steuerparameter dienen der Einstellung des Aktors. Der Aktor wandelt elektrische Signale gemäß den Einstellungen in mechanische Bewegung um.

Es können beispielsweise in einem Fertigungsprozess für das Bearbeiten eines bestimmten Materials verschiedene Parameter zur Einstellung einer Maschine herangezogen werden, um das bestmögliche Fertigungsergebnis zu erzielen.

Werkzeugmaschinen sind üblicherweise nicht mit einer kryptografischen Schutzvorrichtung ausgestattet. Angreifer, die an den Parametersätzen interessiert sind, können diese leicht abgreifen oder manipulieren. Es können die Parameter aber verschlüsselt auf das Steuerungsmodul übermittelt werden. Dort werden sie entschlüsselt und an den Aktor weitergeleitet.

Es ist somit die Aufgabe der vorliegenden Erfindung, eine Möglichkeit zu schaffen, Parameter zur Steuerung eines Aktors geschützt auf den Aktor zu übertragen.

Die Aufgabe wird durch die in den unabhängigen Ansprüchen beschriebenen Maßnahmen gelöst. In den abhängigen Ansprüchen sind vorteilhafte Weiterbildungen der Erfindung dargestellt.

Gemäß einem ersten Aspekt betrifft die Erfindung ein Verfahren zum rechnergestützten Steuern eines Aktors einer Maschine, wobei:
- ein erster Parametersatz an ein Steuermodul übertragen wird, wobei
   - der erste Parametersatz mindestens einen Steuerparameter zum Steuern eines Aktors umfasst,
- der erste Parametersatz vom Steuermodul empfangen wird,
- im Steuermodul ein zweiter Parametersatz anhand des ersten Parametersatzes ermittelt wird, wobei
   - der zweite Parametersatz den mindestens einen Steuerparameter des ersten Parametersatzes umfasst,
- der zweite Parametersatz vom Steuermodul zum Aktor übertragen wird, wobei
   - der zweite Parametersatz durch ein kryptografisches Verfahren kryptografisch verschlüsselt ist,
- der zweite Parametersatz durch den Aktor empfangen wird,
- die kryptografische Verschlüsselung des zweiten Parametersatzes durch eine Entschlüsselungseinheit im Aktor entschlüsselt wird,
   und
- der Aktor anhand des zweiten Parametersatzes gesteuert wird.

Das Verfahren ist dahingehend vorteilhaft, da der zweite Parametersatz kryptografisch verschlüsselt dem Aktor bereitgestellt wird und erst dort entschlüsselt wird. Die Steuerung eines Aktors ist folglich kryptografisch geschützt, insbesondere durch einen kryptografischen Schutz, d.h. durch ein Verschlüsselungsverfahren, verschlüsselt. Dazu wird im Steuermodul ein zweiter Parametersatz anhand eines ersten Parametersatzes, der auf das Steuermodul übertragen wurde, ermittelt. Der zweite Parametersatz wird dann auf den Aktor übertragen. Beispielsweise kann der zweite Parametersatz in einer Form bereitgestellt werden, welche der Aktor auslesen und in mechanische Bewegung umsetzen kann. Der zweite Parametersatz ist insbesondere kryptografisch verschlüsselt. So werden vorzugsweise Steuerparameter, die verschlüsselt dem Aktor übertragen werden und im Aktor entschlüsselt werden, zur Steuerung verwendet. Das Verfahren ermöglicht daher insbesondere den Schutz der Vertraulichkeit, d.h. Schutz der Informationsinhalte bzw. Zugriffsschutz. Es liegt somit der zweite Parametersatz beispielsweise nicht im Klartext vor, was einem Angreifer ein Abgreifen erschwert.

In einer vorteilhaften Ausführungsform des Verfahrens wird der zweite Parametersatz symmetrisch oder asymmetrisch kryptografisch verschlüsselt.

Vorzugsweise kann die kryptografische Verschlüsselung des zweiten Parametersatzes entweder symmetrisch oder asymmetrisch sein. Diese kryptografische Verschlüsselung dient zur digitalen Sicherung der Steuerparameter, so dass diese nicht einfach von einem Angreifer abgegriffen und ausgelesen werden können. Ohne beispielsweise einen passenden kryptografischen Schlüssel, kann ein Angreifer abgegriffene Parameter nicht entschlüsseln und folglich nicht weiterverwenden.

In einer weiteren vorteilhaften Ausführungsform des Verfahrens wird eine kryptografische Authentisierungs- und Integritätsinformation des zweiten Parametersatzes bestimmt und dem Aktor übertragen.

Der zweite Parametersatz kann, beispielsweise durch das Steuermodul, durch eine kryptografische Authentisierungs- und Integritätsinformation ergänzt werden, anhand derer der Aktor die Authentizität und die Integrität der Parameterdaten überprüfen kann. Die Authentisierungs- und Integritätsinformation kann beispielsweise Teil des zweiten Parametersatzes sein oder als Zusatzinformation an den Aktor übertragen werden. Anhand dieser Information lassen sich beispielsweise die Unversehrtheit und der Ursprung der Daten feststellen und ggf. Manipulation oder Daten von unbekannten Dritten aufspüren.

In einer weiteren vorteilhaften Ausführungsform des Verfahrens wird der erste Parametersatz kryptografisch verschlüsselt an das Steuermodul übertragen und der zweite Parametersatz entspricht dem ersten Parametersatz.

Der erste Parametersatz wird vorzugsweise kryptografisch verschlüsselt auf die Maschine übermittelt. So kann beispielsweise beim Erstellen des ersten Parametersatzes eine kryptografische Verschlüsselung festgelegt werden, welche erst im Aktor aufgehoben wird. Der zweite Parametersatz wird beispielsweise so ermittelt, dass er dem ersten Parametersatz entspricht und folglich den kryptografischen Schutz beibehält. Damit ist insbesondere sichergestellt, dass der Parameter bei der Übertragung auf die Maschine und ebenso vom Steuermodul zum Aktor geschützt ist, d.h. nicht in Klartext vorliegt, und vor der Anwendung im Aktor beispielsweise nicht manipuliert oder unbefugt ausgelesen werden kann.

In einer weiteren vorteilhaften Ausführungsform des Verfahrens wird der zweite Parametersatz im Steuermodul von einer Verschlüsselungseinheit durch ein kryptografisches Verfahren kryptografisch verschlüsselt.

Der zweite Parametersatz kann insbesondere im Steuermodul durch ein kryptografisches Verfahren kryptografisch verschlüsselt werden, so dass eine sichere Übertragung des zweiten Parametersatzes vom Steuermodul zum Aktor gewährleistet ist. So wird beispielsweise bei der Ermittlung des zweiten Parametersatzes anhand des ersten Parametersatzes ein kryptografischer Schutz auf den zweiten Parametersatz angewandt. Diese Ausführungsvariante ist insbesondere vorteilhaft, wenn Steuerparameter lokal an der Maschine verschlüsselt werden sollen.

In einer weiteren vorteilhaften Ausführungsform des Verfahrens wird der zweite Parametersatz vom Steuermodul zum Aktor über eine kryptografisch geschützte Kommunikationsverbindung übertragen.

Die Kommunikationsverbindung zwischen Steuermodul und Aktor kann zum Beispiel eine Kabelverbindung, Netzwerkverbindung oder Funkverbindung sein. Ein Angreifer kann beispielsweise an dieser Verbindung die Übertragung der Parameter abgreifen oder manipulieren, d.h. falsche Parameter einspeisen. Eine kryptografisch geschützte Kommunikationsverbindung verhindert insbesondere sowohl das unerwünschte Abgreifen der Parameterdaten als auch das Einbringen von unzulässigen Daten, d.h. bietet beispielsweise einen weiteren Authentizitäts- und/oder Integritätsschutz. So kann beispielsweise eine Transportverschlüsselung integriert werden.

In einer weiteren vorteilhaften Ausführungsform des Verfahrens wird das Steuermodul beim Aktor authentifiziert.

Insbesondere bei einer Funkverbindung zwischen Steuermodul und Aktor wird auf diese Weise sichergestellt, dass das richtige Steuermodul mit dem Aktor kommuniziert und die Verbindung zulässig ist. Es kann beispielsweise der Aktor ein Passwort anfordern mit dem der Aktor das Steuermodul authentifiziert. Beispielsweise kann ein Parametersatz Information über das Steuermodul enthalten, anhand der der Aktor die Authentizität des Steuermoduls überprüfen kann.

Gemäß einem weiteren Aspekt betrifft die Erfindung einen Aktor für eine Maschine umfassend:
- eine Empfangseinheit, die derart ausgebildet ist, einen zweiten Parametersatz von einem Steuermodul zu empfangen, wobei
   - der zweite Parametersatz durch ein kryptografisches Verfahren kryptografisch verschlüsselt ist,
- eine erste Schlüsselspeichereinheit, die derart ausgebildet ist, mindestens einen ersten kryptografischen Schlüssel zu speichern,
- eine Entschlüsselungseinheit, die derart ausgebildet ist, eine kryptografische Verschlüsselung des zweiten Parametersatzes mittels eines ersten kryptografischen Schlüssels zu entschlüsseln,
- eine Steuereinheit, die derart ausgebildet ist, anhand des zweiten Parametersatzes den Aktor zu steuern.

Herkömmliche Aktoren weisen beispielsweise keine Einheiten auf, die einen kryptografisch verschlüsselten Parametersatz interpretieren und den kryptografischen Schutz eines übertragenen Parametersatzes aufheben können. Um insbesondere die Vertraulichkeit des Parametersatzes bis einschließlich zur Übertragung auf den Aktor zu gewährleisten, wird erst im erfindungsgemäßen Aktor nach Empfang des Parametersatzes an der Empfangseinheit die Entschlüsselung in der Entschlüsselungseinheit vorgenommen. Dazu umfasst der Aktor vorzugsweise eine erste Schlüsselspeichereinheit, in welcher mindestens ein kryptografischer Schlüssel hinterlegt ist. Nach dem Aufheben des kryptografischen Schutzes des zweiten Parametersatzes, kann die Steuereinheit den Aktor anhand der Steuerparameter einstellen und somit steuern. Die Steuereinheit übernimmt folglich, beispielsweise ohne weitere dazwischengeschaltete Einheiten, direkt den entschlüsselten Parametersatz von der Entschlüsselungseinheit. Dies ist vorteilhaft, da der Parametersatz und dessen Informationsgehalt nicht öffentlich zugängig gemacht werden und nur vom Aktor selbst, d.h. am Bestimmungsort, entschlüsselt werden kann.

Weitere vorteilhafte Eigenschaften des Aktors sind äquivalent zu den Vorteilen des erfindungsgemäßen Verfahrens.

In einer vorteilhaften Ausführungsform umfasst der Aktor eine Prüfeinheit, die derart ausgebildet ist, die Authentizität und Integrität des vom Steuermodul bereitgestellten zweiten Parametersatzes zu überprüfen.

Die Prüfeinheit erhält beispielsweise die Authentisierungs- und Integritätsinformation des zweiten Parametersatzes, anhand derer sich überprüfen lässt, ob der Parameter von vertrauenswürdiger Stelle kommt oder ob er vollständig ist. Im Gegensatz zu herkömmlichen Aktoren ist diese Ausführungsform vorteilhaft, da lediglich vertrauenswürdige und/oder vollständige Parametersätze zur Steuerung des Aktors verwendet werden können. Des Weiteren kann anhand der Integritätsinformation auch überprüft werden, ob die Steuerparameter des Parametersatzes verändert wurden.

In einer weiteren vorteilhaften Ausführungsform des Aktors sind die Entschlüsselungseinheit und/oder die erste Schlüsselspeichereinheit mechanisch und/oder elektrisch und/oder durch ein Siegel geschützt.

Die Kenntnis des Schlüssels würde beispielsweise Angreifern die Entschlüsselung des Parametersatzes erlauben. Außerdem kann ein Angreifer durch Manipulation der Entschlüsselungseinheit und/oder der ersten Schlüsselspeichereinheit ebenfalls an die entschlüsselten Steuerparameter gelangen. Um diese Angriffsmöglichkeiten zu verhindern, werden beispielsweise die Entschlüsselungseinheit und die Schlüsselspeichereinheit mechanisch und/oder elektrisch und/oder durch ein Siegel geschützt. Beispielsweise können die Einheiten so geschützt sein, dass bei einer Manipulation, z.B. mechanisches Einwirken, ihre Funktionalität aufgehoben wird. Ein Angriffsversuch würde damit die Maschine unbrauchbar machen, da beispielsweise ohne Entschlüsselungsfunktion zum Aufheben des kryptografischen Schutzes eines Parametersatzes der Aktor nicht betrieben werden kann.

Gemäß einem weiteren Aspekt betrifft die Erfindung ein Steuermodul zum Steuern eines Aktors, das eine Sendeeinheit umfasst, die derart ausgebildet ist, einen kryptografisch verschlüsselten zweiten Parametersatz an einen Aktor zu übertragen.

Das erfindungsgemäße Steuermodul erlaubt beispielsweise das Übertragen eines kryptografisch verschlüsselten Parametersatzes an den Aktor. Vorzugsweise liegt der erste Parametersatz schon in kryptografisch verschlüsselter Form vor, so dass das Steuermodul lediglich den zweiten Parametersatz entsprechend dem ersten Parametersatz ermitteln und an den Aktor übertragen kann.

In einer weiteren vorteilhaften Ausführungsform umfasst das Steuermodul eine zweite Schlüsselspeichereinheit, die derart ausgebildet ist, mindestens einen zweiten kryptografischen Schlüssel zu speichern, und eine Verschlüsselungseinheit, die derart ausgebildet ist, eine kryptografische Verschlüsselung für den zweiten Parametersatz mittels eines zweiten kryptografischen Schlüssels zu realisieren.

Mit dieser Ausführungsform kann vorteilhaft ein zweiter Parametersatz lokal im Steuermodul kryptografisch mittels eines kryptografischen Verfahrens verschlüsselt werden. Wenn beispielsweise der erste Parametersatz, der auf die Maschine gebracht wird, nicht in verschlüsselter Form vorliegt, kann mit dieser Ausführungsform des erfindungsgemäßen Steuermoduls eine Verschlüsselung vorgenommen werden. Die zweite Schlüsselspeichereinheit kann dabei mechanisch und/oder elektrisch und/oder durch ein Siegel geschützt sein, um unbefugten Zugang zu den kryptografischen Schlüsseln zu verhindern.

Gemäß einem weiteren Aspekt betrifft die Erfindung ein System, das einen Aktor, ein Steuermodul und eine Kommunikationsverbindung zwischen der Sendeeinheit des Steuermoduls und der Empfangseinheit des Aktors umfasst.

Die Kommunikationsverbindung kann beispielsweise ein Kabel oder eine Funkverbindung sein. Der Aktor ist folglich mit dem Steuermodul verbunden und kann so einen kryptografisch geschützten Parametersatz von diesem empfangen. So ist sichergestellt, dass die Parametersätze auf direktem Weg dem Aktor bereitgestellt werden.

In einer vorteilhaften Ausführungsform ist die Kommunikationsverbindung derart ausgebildet, einen zweiten Parametersatz kryptografisch geschützt von der Sendeeinheit des Steuermoduls zu der Empfangseinheit des Aktors zu übertragen.

Die Kommunikationsverbindung zwischen dem Steuermodul und dem Aktor kann beispielsweise selbst kryptografisch geschützt sein und derart einen Parametersatz übertragen. Zwischen Steuermodul und Aktor wird insbesondere eine sichere Kommunikationsverbindung aufgebaut. So kann die Verbindung beispielsweise vor Man-in-the-middle-Angriffen geschützt werden.

Ein weiterer Aspekt der Erfindung betrifft ein Computerprogrammprodukt, das direkt in einen programmierbaren Computer ladbar ist, umfassend Programmcodeteile, die dazu geeignet sind, die Schritte des Verfahrens durchzuführen.

Ausführungsbeispiele des erfindungsgemäßen Verfahrens, Aktors, Steuermoduls und Systems sind in den Zeichnungen beispielhaft dargestellt und werden anhand der nachfolgenden Beschreibung näher erläutert. Es zeigen:
- Fig. 1: ein Ablaufdiagramm des erfindungsgemäßen Verfahrens zum rechnergestützten Steuern eines Aktors;
- Fig. 2: eine schematische Darstellung eines Ausführungsbeispiels des erfindungsgemäßen Systems; und
- Fig. 3: eine weitere schematische Darstellung eines Ausführungsbeispiels des erfindungsgemäßen Systems.

Einander entsprechende Teile sind in allen Figuren mit den gleichen Bezugszeichen versehen.

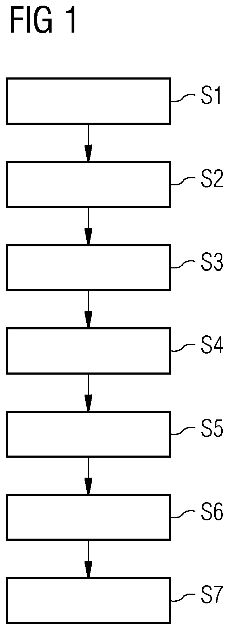

In Figur 1 ist der Ablauf des erfindungsgemäßen Verfahrens zum Steuern eines Aktors 2 mittels eines Parametersatzes P2 gezeigt, welcher kryptografisch verschlüsselt ist und dessen kryptografische Verschlüsselung im Aktor 2 aufgehoben wird. Der Aktor 2 übersetzt dabei von einem Steuermodul 1 übertragene elektrische Signale in mechanische Bewegung. Elektrische Signale können beispielsweise einen Parametersatz zum Steuern eines Aktors 2 umfassen. Im ersten Schritt S1 des Verfahrens wird ein erster Parametersatz P1 an das Steuermodul 1 übertragen. Dabei umfasst der erste Parametersatz P1 mindestens einen Steuerparamater zum Steuern eines Aktors 2. Im zweiten Verfahrensschritt S2 wird der erste Parametersatz P1 vom Steuermodul 1 empfangen. Daraufhin wird im nächsten Schritt S3 im Steuermodul 1 anhand des ersten Parametersatzes ein zweiter Parametersatz ermittelt. Beispielsweise kann hier der zweite Parametersatz P2 kryptografisch im Steuermodul 1 verschlüsselt werden, wobei der zweite Parametersatz P2 die Steuerparameter des ersten Parametersatzes P1 umfasst. Der kryptografische Schutz kann dabei beispielsweise ein symmetrisches oder asymmetrisches Verschlüsselungsverfahren sein. Im vierten Schritt S4 des Verfahrens wird der zweite Parametersatz P2 vom Steuermodul 1 zum Aktor 2 über eine Kommunikationsverbindung 3, die als Kabel- oder Funkverbindung ausgebildet sein kann, übertragen. Hierbei ist der zweite Parametersatz P2 kryptografisch verschlüsselt, so dass kein Unbefugter den Inhalt auslesen kann. Im nächsten Schritt S5 wird der zweite Parametersatz P2 durch den Aktor 2 empfangen. Im Schritt S6 wird die kryptografische Verschlüsselung durch eine Entschlüsselungseinheit 23 im Aktor 2 aufgehoben. Im letzten Schritt S7 wird der Aktor anhand des zweiten Parametersatzes P2 eingestellt und gesteuert.

Folglich basiert der Ablauf des Verfahrens auf der Kommunikation eines Steuermoduls 1 mit einem Aktor 2 und ist vorteilhaft durch den kryptografischen Schutz des zweiten Parametersatzes P2 ergänzt. In vorteilhafter Weise kann die Kommunikationsverbindung 3 selbst kryptografisch geschützt sein, so dass weitere Manipulationsmöglichkeiten, wie z.B. das Einspeisen von falschen Parametern, verhindert werden.

Als Anwendungsbeispiel für das erfindungsgemäße Verfahren kann das Laserschneiden von Metallen genannt werden. Dabei gibt es eine Vielzahl von Steuerparametern, die unter anderem vom zu schneidenden Material abhängen. Mit den Steuerparametern kann die Leistung, die Frequenz, die Fokussierungstiefe des Lasers, die Art und Menge des Schutzgases, etc. eingestellt werden. Dabei ist es notwendig, aber meist aufwendig, die richtigen Steuerparameter für eine Einstellung der Maschine zu finden. Bei solchen Werkzeugmaschinen ist die Einstellung bestimmter Steuerparameter von entscheidender Bedeutung für die Qualität des Arbeitsergebnisses. Die Kenntnis der richtigen Steuerparameter kann folglich von großer wirtschaftlicher Bedeutung sein. Parametersätze für Werkzeugmaschinen stellen einen Vermögenswert dar und können kommerziell vermarktet werden. Folglich besteht das Interesse, die Steuerparameter so zu schützen, dass sie nicht bei der Übertragung auf den Aktor abgegriffen oder ausgelesen werden können.

So kann ein, z.B. von einem Material abhängiger, Parametersatz für den Gebrauch einer Werkzeugmaschine an einen Betreiber der Maschine verkauft werden. Insbesondere die fein eingestellten und auf den jeweiligen Prozess abgestimmten Einstellungsparameter sind deshalb meist nicht einfach zusammen mit der Werkzeugmaschine verfügbar oder an dieser ablesbar. Die Steuerparameter sollen also geschützt, d.h. geheim, an den Kunden oder Betreiber einer Maschine übermittelt werden.

Um den ersten Parametersatz P1 geheim zu halten und das Abgreifen und Auslesen zu verhindern, wird dieser mittels eines kryptografischen Verfahrens verschlüsselt auf die Maschine übertragen. In einem anderen Beispiel ermittelt ein Anwender einer Maschine für ein bestimmtes Produkt die notwendigen Steuerparameter für die korrekte Einstellung der Maschine. Dieses Wissen lässt sich an Konkurrenten verkaufen, so dass durch die Verschlüsselung der Steuerparameter ein Know-How-Schutz erzeugt wird.

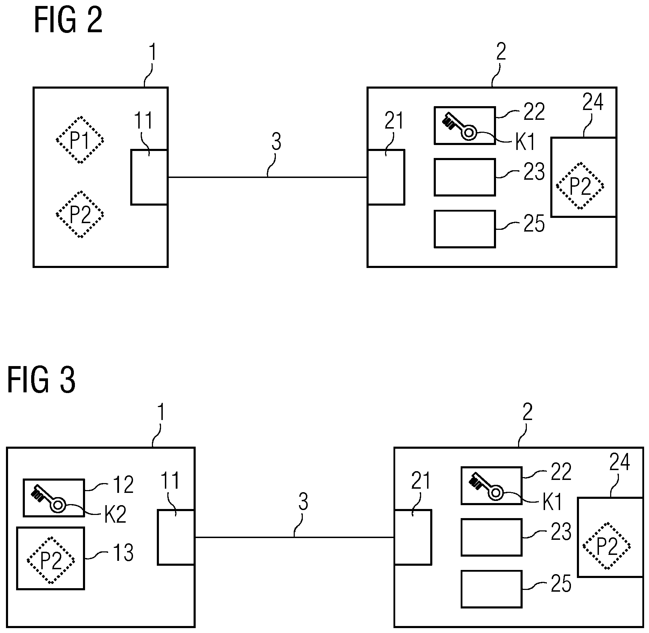

Figur 2 zeigt schematisch ein erfindungsgemäßes Beispiel des Systems zum Steuern eines Aktors 2 mittels eines kryptografisch geschützten Parametersatz P2. In diesem Ausführungsbeispiel wird der erste Parametersatz P1 kryptografisch verschlüsselt dem Steuermodul 1 übergeben. Beispielsweise kann der Hersteller einer Maschine die Steuerparameter vorab durch Testläufe bestimmen und einem Kunden als kryptografisch verschlüsselten Parametersatz zusätzlich zur Maschine verkaufen. Durch das erfindungsgemäße System wird ein Zugriffschutz für die Parametersätze zur Steuerung eines Aktors realisiert.

Im Steuermodul 1 wird anhand des ersten Parametersatzes P1 ein zweiter Parametersatz P2 ermittelt. Der zweite Parametersatz kann beispielsweise in ein Format, das der Aktor 2 auslesen kann, übermittelt werden. Wenn der erste Parametersatz P1 bereits verschlüsselt auf die Maschine gebracht wird, wird der zweite Parametersatz P2 vorteilhaft so ermittelt, dass er dem ersten Parametersatzes P1 entspricht. Folglich ist der zweite Parametersatz P2 dann ebenso durch die kryptografische Verschlüsselung geschützt.

Der verschlüsselte Parametersatz P2 wird von einer Sendeeinheit 11 des Steuermoduls 1 über eine Kommunikationsverbindung 3 an den Aktor 2 übertragen. Vorzugsweise umfasst der zweite Parametersatz P2 außerdem eine kryptografischen Authentisierungs- und Integritätsinformation. Beim Aktor 1 empfängt die Empfangseinheit 21 den verschlüsselten Parametersatz P2. Mittels mindestens eines ersten Schlüssels K1, der in der ersten Schlüsselspeichereinheit 22 gespeichert ist, kann die Entschlüsselung des zweiten Parametersatzes P2 in der Entschlüsselungseinheit 23 durchgeführt werden. Die Schlüsselspeichereinheit 22 und/oder die Entschlüsselungseinheit 23 können elektrisch und/oder mechanisch und/oder durch ein Siegel geschützt sein. In der Prüfeinheit 25 wird die Authentizität und Integrität des Parametersatzes P2 anhand der Authentisierungs- und Integritätsinformation überprüft. Von der Prüfeinheit 25 wird der zweite Parametersatz P2 an die Steuereinheit 24 übertragen. Wenn die Überprüfung in der Prüfeinheit 25 ergibt, dass der zweite Parametersatz P2 beispielsweise nicht vollständig ist oder die Authentizitätsprüfung negativ ist, kann eine Einstellung des Aktors 2 verhindert werden. Die Prüfeinheit 25 kann in vorteilhafter Weise so gestaltet sein, dass sie die Weiterleitung eines mangelhaften zweiten Parametersatzes P2 an die Steuereinheit 24 verhindert.

Der geprüfte und entschlüsselte Parametersatz P2 wird von der Steuereinheit 24 benutzt, um den Aktor 2 einzustellen. Um im Aktor 2 Manipulation oder Abgreifen des Parametersatzes zu verhindern, können die Entschlüsselungseinheit 23 und/oder die erste Schlüsselspeichereinheit 22 mechanisch, elektronisch oder durch ein Siegel geschützt sein. Einen weiteren physikalischen Schutz vor Manipulation bieten z.B. Bohrschutzfolien oder ähnliche Schutzhüllen. Diese Vorrichtungen bewirken, dass bei Manipulation an der Entschlüsselungseinheit 23 und/oder der ersten Schlüsselspeichereinheit 22, die Funktionalität der Einheit zerstört wird. Ohne eine funktionierende Entschlüsselungseinheit 23 kann im Aktor keine Entschlüsselung des zweiten Parametersatzes P2 durchgeführt werden, so dass weiter auch der Aktor nicht eingestellt werden kann. Ein Benutzer kann folglich nicht unbefugt an die Steuerparameter in der Entschlüsselungseinheit 23 gelangen, ohne Gefahr zu laufen, den Aktor 2 zu beschädigen.

Das erfindungsgemäße System mit dem erfindungsgemäßen Aktor 2 wie in Figur 2 dargestellt erlaubt das sichere, verschlüsselte Übertragen eines zweiten Parametersatzes P2 zum Einstellen eines Aktors 2, ohne dass die Steuerparameter des zweiten Parametersatzes P2 in Klartext abrufbar sind. Der zweite Parametersatz P2 wird insbesondere aus dem ersten Parametersatz P1, der beispielsweise kryptografisch verschlüsselt auf die Maschine übermittelt wird, ermittelt und bis zum Aktor 2 übertragen.

Darüber hinaus kann erfindungsgemäß das Steuermodul 1 beim Aktor 2 authentifiziert werden. Dies ist vorteilhaft, da kein unbefugtes Steuermodul 1 z.B. über eine Funkverbindung Anweisungen in Form eines Parametersatzes an den Aktor 2 senden kann. Eine Authentifizierung kann beispielsweise über ein Passwort, das das Steuermodul 1 dem Aktor 2 übermittelt, durchgeführt werden.

Eine weitere Sicherheitsmaßnahme zum Schützen der Steuerparameter bis zur Entschlüsselung im Aktor 2 ist eine kryptografisch geschützte Kommunikationsverbindung 3. Dazu wird eine sichere Kommunikationsverbindung 3 zwischen dem Steuermodul 1 und dem Aktor 2 aufgebaut. Indem die Kommunikationsverbindung 3 selbst kryptografisch geschützt wird, kann man Angriffe auf die Verbindung, wie z.B. Einschleusen von falschen Parametern genauso wie das Abgreifen der Parameter verhindern.

Ein weiteres Ausführungsbeispiel des erfindungsgemäßen Systems ist in Figur 3 dargestellt. Hierbei kann beim Erstellen des zweiten Parametersatzes P2 im Steuermodul 1, dieser durch ein kryptografisches Verfahren kryptografisch verschlüsselt werden. Außerdem kann eine Authentizitäts- und Integritätsinformation des zweiten Parametersatzes P2 bestimmt werden. Dazu umfasst das Steuermodul 1 vorzugsweise eine Verschlüsselungseinheit 13 und eine zweite Schlüsselspeichereinheit 12, in der mindestens ein zweiter kryptografischer Schlüssel K2 gespeichert ist. Beispielsweise kann die Verschlüsselungseinheit 13 die Authentizitäts- und Integritätsinformation des zweiten Parametersatzes P2 bestimmen, so dass diese Information an den Aktor 2 übermittelt werden kann.

Für eine bestehende Werkzeugmaschine, die ein Steuermodul 1 und einen Aktor 2 umfasst, auf welchen ein erster Parametersatz P1 beispielsweise unverschlüsselt aufgebracht wird, kann mit diesem in Figur 3 gezeigten Ausführungsbeispiel des erfindungsgemäßen Steuermoduls 1 eine lokale Verschlüsselung der Steuerparameter vorgenommen werden. Lokale Verschlüsselung bedeutet hier, dass der erste Parametersatz P1 unverschlüsselt dem Steuermodul 1 übermittelt wird und im Steuermodul 1 beim Ermitteln des zweiten Parametersatzes P2 eine kryptografische Verschlüsselung durchgeführt wird. Folglich ist der zweite Parametersatz P2 kryptografisch verschlüsselt. Dies ist vorteilhaft, da bei einem bestehenden System, wie z.B. einer Werkzeugmaschine, wo noch kein kryptografischer Schutz zwischen Steuermodul 1 und Aktor 2 besteht, das erfindungsgemäße System ein Ergänzung durch Verschlüsselung von Steuerparametern darstellt.

Der zweite Schlüssel K2 der zweiten Schlüsselspeichereinheit 12 kann dabei gleich oder verschieden zum ersten Schlüssel K1 in der ersten Schlüsselspeichereinheit 22 sein, je nachdem ob ein symmetrisches oder asymmetrisches Verschlüsselungsverfahren angewendet wird.

Denkbar ist weiterhin, dass ein Betreiber einer Werkzeugmaschine Steuerparameter selbst kryptografisch verschlüsseln und vor Angriffen schützen will. Mit dem in Figur 3 gezeigten Ausführungsbeispiel des erfindungsgemäßen Systems können direkt in der Maschine der zweite Parametersatz P2 im Steuermodul 1 von der Verschlüsselungseinheit 13 kryptografisch geschützt werden und so zum Aktor 2 übertragen werden. Im gezeigten Ausführungsbeispiel wird der zweite Parametersatz P2 im Steuermodul 1 anhand des ersten Parametersatzes P1 ermittelt und beispielsweise mittels eines symmetrischen Verschlüsselungsverfahrens mit einem zweiten Schlüssel K2 verschlüsselt. Der Schutz wird im Aktor 2 mit dem ersten Schlüssel K1 aufgehoben, der bei einem symmetrischen Verschlüsselungsverfahren dem ersten Schlüssel entspricht.

Der verschlüsselte zweite Parametersatz P2 wird erst im Aktor 2 in der Entschlüsselungseinheit 23 entschlüsselt und gegebenenfalls seine Authentizität und Integrität in der Prüfeinheit 25 geprüft. Dies kann beispielsweise mittels einer digitalen Signatur erfolgen. Wenn die Authentizitäts- und Integritätsprüfung positiv ausfällt, wird der entschlüsselte zweite Parametersatz P2 an die Steuereinheit 24 weitergeleitet. Bei einem negativen Prüfergebnis kann die Weiterleitung an die Steuereinheit 24 verhindert werden. Beispielsweise kann der Aktor 2 eine Ausführung unterbinden. Eine darauf folgende Maßnahme kann vorteilhafter Weise eine erneute Übertragung des ersten Parametersatzes P1 auf das Steuermodul 1 sein.

Mit der in Figur 3 dargestellten Ausführungsform eines erfindungsgemäßen Systems hat ein Betreiber einer Werkzeugmaschine die Kontrolle über die Verschlüsselung des eingegeben ersten Parametersatzes P1. Beispielsweise kann der Betreiber ein symmetrisches Verschlüsselungsverfahren wählen und in der zweiten Schlüsselspeichereinheit 12 des Steuermoduls 1 und in der ersten Schlüsselspeichereinheit 22 des Aktors 2 jeweils denselben ersten und zweiten Schlüssel K1 und K2, z.B. ein Passwort, hinterlegen. Der zweite Parametersatz P2 wird dann anhand des ersten Parametersatzes P1 ermittelt und kryptografisch verschlüsselt. So ist die Übertragung des zweiten Parametersatzes P2 zwischen Steuermodul 1 und Aktor 2 sicher und bei z.B. Wartung der Maschine kann der zweite Parametersatz P2 nicht ausgelesen werden, da dieser nicht in Klartext vorliegt. Zur Sicherung der ersten Schlüsselspeichereinheit 22 und/oder zweiten Schlüsselspeichereinheit 12 können ein elektrischer und/oder ein mechanischer Schutz und/oder ein Siegel dienen, um Manipulation an der jeweiligen Einheit zu verhindern. Ebenso können die Verschlüsselungseinheit 13 und/oder die Entschlüsselungseinheit 23 derart geschützt sein. Weiter ist für diese Einheiten ein physikalischer Schutz denkbar, der derart eingerichtet ist, dass die zu schützende Einheit ihre Funktionalität verliert, wenn der Schutz angegriffen wird. Als Beispiel ist hier eine bekannte Bohrschutzfolie als Schutzabdeckung der Einheit zu nennen. Diese ist mit einem leitfähigen Material bedruckt, dessen Widerstand sich bei einer Verletzung, z.B. durch Aufbohren oder Aufhebeln, der Schutzfolie ändert. Wenn die Bohrschutzfolie mit der Einheit elektronisch verbunden ist, kann die Funktionalität der Einheit unterbunden werden.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Verfahren zum rechnergestützten Steuern eines Aktors (2) einer Maschine, wobei:
- ein erster Parametersatz (P1) an ein Steuermodul (1) übertragen wird (S1), wobei
- der erste Parametersatz (P1) mindestens einen Steuerparameter zum Steuern eines Aktors (2) umfasst,
- der erste Parametersatz (P1) vom Steuermodul (1) empfangen wird (S2),
- im Steuermodul (1) ein zweiter Parametersatz (P2) anhand des ersten Parametersatzes (P1) ermittelt wird (S3), wobei
- der zweite Parametersatz (P2) den mindestens einen Steuerparameter des ersten Parametersatzes (P1) umfasst,
- der zweite Parametersatz (P2) vom Steuermodul (1) zum Aktor (2) übertragen wird (S4), wobei
- der zweite Parametersatz (P2) durch ein kryptografisches Verfahren kryptografisch verschlüsselt ist,
- der zweite Parametersatz (P2) durch den Aktor (2) empfangen wird (S5),
- die kryptografische Verschlüsselung des zweiten Parametersatzes (P2) durch eine Entschlüsselungseinheit im Aktor (2) entschlüsselt wird (S6),
und
- der Aktor (2) anhand des zweiten Parametersatzes (P2) gesteuert wird (S7).

2. Verfahren nach Anspruch 1, wobei der zweite Parametersatz (P2) symmetrisch oder asymmetrisch kryptografisch verschlüsselt wird.

3. Verfahren nach einem der vorangehenden Ansprüche, wobei eine kryptografische Authentisierungs- und Integritätsinformation des zweiten Parametersatzes (P2) bestimmt wird und dem Aktor (2) übertragen wird.

4. Verfahren nach einem der vorangehenden Ansprüche, wobei der erste Parametersatz (P1) kryptografisch verschlüsselt an das Steuermodul (1) übertragen wird und der zweite Parametersatz (P2) dem ersten Parametersatz (P1) entspricht.

5. Verfahren nach einem der Ansprüche 1 bis 3, wobei der zweite Parametersatz (P2) im Steuermodul (1) von einer Verschlüsselungseinheit (13) durch ein kryptografisches Verfahren kryptografisch verschlüsselt wird.

6. Verfahren nach einem der vorangehenden Ansprüche, wobei der zweite Parametersatz (P2) vom Steuermodul (1) zum Aktor (2) über eine kryptografisch geschützte Kommunikationsverbindung (3) übertragen wird.

7. Verfahren nach einem der vorangehenden Ansprüche, wobei das Steuermodul (1) beim Aktor (2) authentifiziert wird.

8. Aktor (2) für eine Maschine, umfassend:
- eine Empfangseinheit (21), die derart ausgebildet ist, einen zweiten Parametersatz (P2) von einem Steuermodul (1) zu empfangen, wobei
- der zweite Parametersatz (P2) durch ein kryptografisches Verfahren verschlüsselt ist,
- eine erste Schlüsselspeichereinheit (22), die derart ausgebildet ist, mindestens einen ersten kryptografischen Schlüssel (K1) zu speichern,
- eine Entschlüsselungseinheit (23), die derart ausgebildet ist, eine kryptografische Verschlüsselung des zweiten Parametersatzes (P2) mittels eines ersten kryptografischen Schlüssels (K1) zu entschlüsseln,
- eine Steuereinheit (24), die derart ausgebildet ist, anhand des zweiten Parametersatzes (P2) den Aktor (2) zu steuern.

9. Aktor (2) nach Anspruch 8, umfassend eine Prüfeinheit (25), die derart ausgebildet ist, die Authentizität und Integrität des vom Steuermodul (1) bereitgestellten zweiten Parametersatzes (P2) zu überprüfen.

10. Aktor (2) nach Anspruch 8, wobei die Entschlüsselungseinheit (23) und/oder die erste Schlüsselspeichereinheit (22) mechanisch und/oder elektrisch und/oder durch ein Siegel geschützt sind.

11. Steuermodul (1) zum Steuern eines Aktors (2), umfassend eine Sendeeinheit (11), die derart ausgebildet ist, einen kryptografisch verschlüsselten zweiten Parametersatz (P2) an einen Aktor (2) zu übertragen.

12. Steuermodul (1) nach Anspruch 11, umfassend:
- eine zweite Schlüsselspeichereinheit (12), die derart ausgebildet ist, mindestens einen zweiten kryptografischen Schlüssel (K2) zu speichern
und
- eine Verschlüsselungseinheit (13), die derart ausgebildet ist, eine kryptografische Verschlüsselung für den zweiten Parametersatz (P2) mittels eines zweiten kryptografischen Schlüssels (K2) zu realisieren.

13. System umfassend
- einen Aktor (2) nach einem der Ansprüche 8 bis 10,
- ein Steuermodul (1) nach einem der Ansprüche 11 und 12, und
- eine Kommunikationsverbindung (3) zwischen der Sendeeinheit (11) des Steuermoduls (1) und der Empfangseinheit (21) des Aktors (2).

14. System nach Anspruch 13, wobei die Kommunikationsverbindung (3) derart ausgebildet ist, einen zweiten Parametersatz (P2) kryptografisch geschützt von der Sendeeinheit (11) des Steuermoduls (1) zu der Empfangseinheit (21) des Aktors (2) zu übertragen.

15. Computerprogrammprodukt, das direkt in einen programmierbaren Computer ladbar ist, umfassend Programmcodeteile, die dazu geeignet sind, die Schritte des Verfahrens nach einem der Ansprüche 1 bis 7 durchzuführen.
